# EUROPEAN PATENT APPLICATION

(11) **EP 2 384 720 A2**
(43) Date of publication of application: **09.11.2011**
(21) Application number: 11003681.1
(22) Date of filing: 05.05.2011
(51) Int. Cl.: A61C 17/22, A46B 15/00

(54) **Toothbrush and method of wirelessly providing feedback related to its use**

(30) Priority: 07.05.2010 US 775862
(71) Applicant: Braun GmbH, 61476 Kronberg/Taunus (DE)
(72) Inventor: Schmid, Michael, 60599 Frankfurt (DE); Vetter, Ingo, 61184 Karben (DE); Reick, Hansjörg, Cincinnati, Ohio 45243 (US)

(57) **Abstract**

A personal hygiene system is provided herein. One embodiment comprises a personal hygiene device, such as for example an electric toothbrush, having wireless communication circuitry in combination with a computer readable medium containing processor executable instructions for causing a multimedia device that was previously unassociated with the personal hygiene device to communicate with the personal hygiene device, to receive data from the personal hygiene device related to the use of the personal hygiene device and for causing the multimedia device to provide an output as a function of the data.

## Description

### Technical Field

This disclosure relates to a personal hygiene system having a personal hygiene device in wireless communication with a multimedia device, which was previously unassociated with the personal hygiene device. More particularly, the present disclosure relates to a personal hygiene appliance, such as, for example, an electric toothbrush configured to communicate wirelessly with a multimedia device, such as for example, a cell phone, computer, portable game console or smart device.

### Background

Many personal hygiene devices provide little feedback to users. Some toothbrushes provide audible feedback and have timers, such as a two minute timer that provides a beeping noise to signal the end of a normal brushing cycle. These timers may also beep at 30 second intervals to signal to a user to brush different quadrants of the mouth. In addition, some toothbrushes are equipped with pressure sensors that cause the brushing motion to stop, thereby notifying the user that they are brushing too hard or not hard enough.

### Summary

A novel personal hygiene system is provided herein. One embodiment comprises a personal hygiene device, such as for example an electric toothbrush, having wireless communication circuitry in combination with a computer readable medium containing processor executable instructions for causing a multimedia device that was previously unassociated with the personal hygiene device to communicate with the personal hygiene device, to receive data from the personal hygiene device related to the use of the personal hygiene device and for causing the multimedia device to provide an output as a function of the data.

Another embodiment provides an oral care system. The system includes a toothbrush having wireless communication circuitry, an adapter for wirelessly interfacing the toothbrush with a multimedia device, and a processor readable medium containing processor executable instructions for causing the multimedia device to receive data transmitted from the toothbrush and to display an output as a function of that data.

In yet another embodiment, a method of providing feedback related to the use of a toothbrush is provided. The method includes the steps of providing a toothbrush having wireless communications capabilities for wirelessly communicating with a device which was previously unassociated with the toothbrush; and providing a processor readable medium containing processor executable instructions to cause the previously unassociated device to wirelessly communicate with the toothbrush and to display data communicated from the toothbrush to the previously unassociated device.

Other features and advantages of the invention will be apparent from the description and drawings, and from the claims.

### Description of Drawings

Figure 1 is an illustration of a personal hygiene system consisting of an electric toothbrush and a multimedia device in accordance with one embodiment.

Figure 2 is an exemplary block circuit diagram of the personal hygiene system of Figure 1.

Figure 3a is an exemplary block circuit diagram of an embodiment of an adaptor having a connection port and a multimedia device having a mating connection port.

Figure 3b is an exemplary block circuit diagram of an embodiment of an adaptor for interfacing between a personal hygiene device and a multimedia device.

Figure 4a is an exemplary embodiment of a toothbrush having motion sensors.

Figure 4b is an exemplary embodiment of an adaptor and sensing bar for connecting to a multimedia device and tracking the motion of the toothbrush of Figure 4a.

Figure 5 is an exemplary block circuit diagram of the toothbrush having motion sensors and the adaptor for a multimedia device in accordance with the embodiments of Figures 4a and 4b.

Figure 6 is an exemplary logic flow diagram of communications between a personal hygiene device and a multimedia device.

### Detailed Description

The following includes definitions of exemplary terms used throughout the disclosure. Both singular and plural forms of all terms fall within each meaning. Except where noted otherwise, capitalized and non-capitalized forms of all terms fall within each meaning.

"Circuit communication" as used herein indicates a communicative relationship between devices. Direct electrical, electromagnetic, and optical connections and indirect electrical, electromagnetic, and optical connections are examples of circuit communication. Two devices are in circuit communication if a signal from one is received by the other, regardless of whether the signal is modified by some other device. For example, two devices separated by one or more of the following—amplifiers, filters, transformers, optoisolators, digital or analog buffers, analog integrators, other electronic circuitry, fiber optic transceivers, or even satellites—are in circuit communication if a signal from one is communicated to the other, even though the signal is modified by the intermediate device(s). As another example, an electromagnetic sensor is in circuit communication with a signal if it receives electromagnetic radiation from the signal. As a final example, two devices not directly connected to each other, but both capable of interfacing with a third device, for example, a CPU, are in circuit communication.

"Signal" as used herein includes but is not limited to one or more electrical signals, transmission signals, analog or digital signals, one or more computer instructions, a bit or bit stream, or the like.

"Logic" is synonymous with "circuit" as used herein and includes but is not limited to hardware, firmware, software and/or combinations of each to perform a function(s) or an action(s). For example, based on a desired application or need logic may include a software controlled microprocessor or microcontroller, discreet logic, such as an application specific integrated circuit (ASIC), or other programmed logic device. Logic may also be fully embodied as software. The circuits identified and described herein may have many different configurations to perform the desired functions.

Certain values identified in the detailed description are exemplary and they are determined as needed for a particular personal hygiene system. Accordingly, the inventive concepts disclosed and claimed herein are not limited to the particular values or ranges of values used to describe the embodiments disclosed herein.

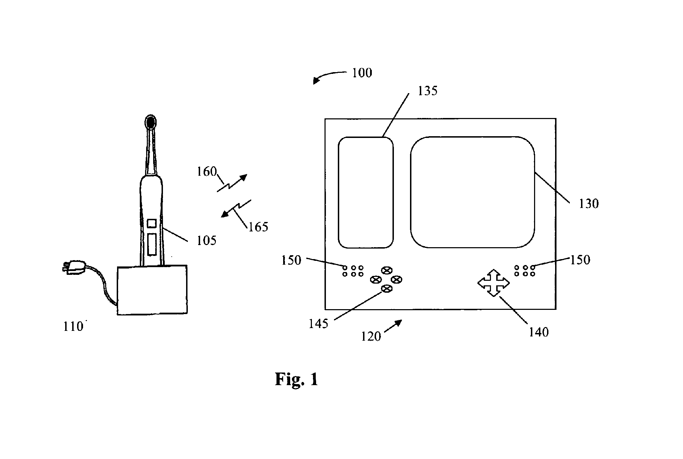

Figure 1 is a personal hygiene system 100 consisting of a rechargeable electric toothbrush 103 and multimedia device 120 in accordance with one embodiment of the present disclosure. Although the embodiments described herein in detail are directed toward a toothbrush, the disclosure is applicable to any personal hygiene device, such as for example a razor, a spray tan applicator, a spray makeup applicator, *etc.* In addition, toothbrushes that have manually operated heads, but include electronics, are included in the term "electric" toothbrush, such as for example, a manual toothbrush with electronics embedded in the handle. Moreover, the term toothbrush includes handles (motorized handles if the toothbrush has an motorized head) having other oral care implements attached thereto, such as tongue cleaners, floss attachments, gum massagers, polishing elements, *etc.* Therefore use of the term toothbrush includes a toothbrush handle having an attachment that may not be a "brush."

The rechargeable electric toothbrush 103 includes a charging base 110, a motorized handle 105, an on/off switch 106 and a display 107. Toothbrush 103 includes wireless communications capabilities to communicate with multimedia device 120 via wireless data signals 160, 165.
Multimedia device 120 can be any multimedia device that is previously unassociated with the toothbrush 103, and preferably is a common device, such as for example a game console, a cell phone, a smart device, a personal computer, *etc.* In other words the multimedia device 120 is commercially available or commonplace and is not sold as a device that is dedicated for use with a personal hygiene device, such as the toothbrush 103. As used herein, the term "smart device" refers to any portable device capable of running one or more software applications. Smart devices also can be connected to the Internet or one or more computer networks. Smart devices include, but are not limited to, smartphones (for example, iPhone® or Blackberry® brand of smartphone), pda's, netbooks, GPS devices, tablets, e-readers, iPads®, mobile game consoles. In one embodiment, the multimedia device 120 is a simple display. In another embodiment, the multimedia device 120 is a NINTENDO DS, NINTENDO DSi XL or a SONY PSP. In the embodiment disclosed in Figure 1, the multimedia device 120 includes a first display 130, a second display 135, speakers 150, a first set of user arrow key inputs 140, and a plurality of pushbutton inputs 145. Multimedia device 120 may also include additional inputs or different types of inputs, such as for example a keyboard (not shown).

Wireless communication 160 and 165 between the toothbrush 103 and the multimedia device 120 may be established through Bluetooth, WiFi, WLAN, LAN, cellular, or any type of radio communication. In one embodiment, wireless communications are established with a standard communication protocol for a wireless local area network (WLAN), such as IEEE 802.11. Such an embodiment is particularly suitable if multimedia device 120 is, for example, a NINTENDO DS, which has a built-in 802.11 WLAN communication protocol. Other forms of wireless communication may be used, such as for example infrared (IR) transmitters/receivers or acoustical communications.

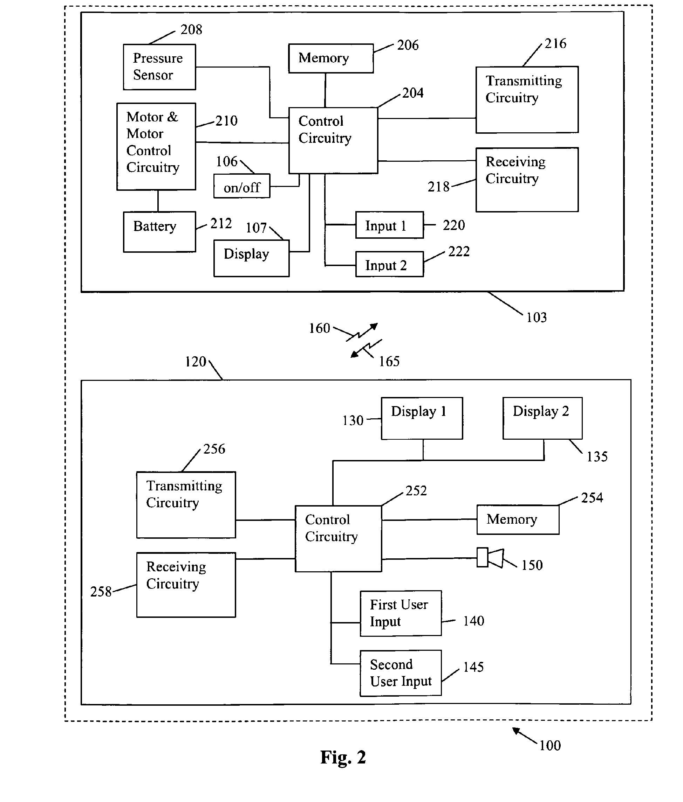

Multimedia device 120 includes software stored on a processor readable medium having processor executable instructions for causing the multimedia device 120 to display information derived from the data signals 160. In one embodiment, the processor readable medium is memory 206 (Figure 2). In addition, the processor executable instructions may cause the multimedia device 120 to download current news, comics, weather or sports information, or to display a joke of the day. In sum, the software may cause the multimedia device 120 to display information not related to the personal hygiene device 103, but that the user finds interesting. The software may be downloaded wirelessly from, for example, a wireless network and stored in the memory 206 (Figure 2) of the multimedia device 120. Optionally, the software may reside on a game cartridge for a game console, a jump drive, a compact disc, a DVD or any other processor readable medium. The software enables multimedia device 120 to recognize and communicate with the toothbrush 103 and causes the multimedia device 120 to display the desired output on displays 130 and 135.

Figure 2 is an exemplary block circuit diagram of the personal hygiene system 100. Personal hygiene system 100 includes electric toothbrush 103 and multimedia device 120. Electric toothbrush 103 may include: rechargeable battery 212 that is recharged through an inductive charger (not shown); motor and motor control circuitry 210; on/off switch 106; display 107; memory 206; transmitting circuitry 216; receiving circuitry 218; and pressure sensor 208; all in circuit communication with control circuitry 204. Control circuitry 204 includes a processor or microprocessor. Transmitting circuitry 216 and receiving circuitry 218 include one or more antennas (not shown separately). The antennas may be separate components or built into the printed circuit board containing the transmitting circuitry 216 and receiving circuitry 218.

In addition, electric toothbrush 103 may also include a first user input 220 and a second user input 222 in circuit communication with control circuitry 204. First and second user inputs 220, 222 may be any type of inputs, and in one example, are pushbutton inputs. First and second user inputs 220, 222 may be used to communicate user input commands to multimedia device 120 before, during, or after brushing. Although this embodiment is described as having two user inputs, any number of user inputs may be provided. User inputs 220, 222 may be used to toggle between different displays, highlight and select particular options or settings, or to control a game being played on the multimedia device 120.

Wireless communications are conducted through transmitting circuitry 216 for transmitting data signals 160 to multimedia device 120 and receiving circuitry 218 for receiving data signals 165 from multimedia device 120. The data signals 160 may be indicative of brushing information, such as for example, brushing pressure, brushing time, quadrant of the oral cavity being brushed, type of brush head attached to the toothbrush 103, battery status, movement of toothbrush 103, position of toothbrush 103, or any other data relating to the operation of the toothbrush 103 or a brushing action. In addition, the data signals 160 may include information relating to the activation of user inputs, such as for example, first and second user inputs 220, 222.

Although exemplary embodiments of the devices described in detail herein have both transmitting circuitry and receiving circuitry, embodiments of devices are contemplated that only have transmitting circuitry or only have receiving circuitry. For example, toothbrush 103 may optionally include only transmitting circuitry 216 and multimedia device may only include receiving circuitry 258. In that embodiment, one way wireless communications is utilized. Accordingly, the term wireless communications encompass all wireless communications, including, but not limited to, two way communications and one way communications.

Multimedia device 120 includes a first display 130, a second display 135, memory 254, speaker 150, first user inputs 140, second user inputs 145, transmitting circuitry 256, and receiving circuitry 258, all in circuit communication with control circuitry 252. Control circuitry 252 includes a processor or microprocessor. The multimedia device 120 is not previously associated with the electric toothbrush 130, so a user need not purchase a multimedia device 120 along with electric toothbrush 103.

Displays 130 and 135 may be used to display graphical and narrative information derived from the data signals 160, such as brushing time, brushing pressure, battery status, location of toothbrush in oral cavity, movement of a character in a game, movement of the toothbrush, *etc.* In one embodiment, display 130 or display 135 displays historical information based upon prior brushing activity, such as for example times of day teeth were brushed, length of prior brushing times, maximum brushing force, if too much brushing force is being applied, if too little brushing force is being applied, *etc.* In addition, statistical data may be displayed on displays 130, 135, such as for example average brushing time, average brushing force, average number of times teeth brushed per day, brushing behavior, *etc.* In addition, multimedia device 120 may display instructions to the user on how to perform certain brushing functions. For example, the multimedia device may provide instructions for cleaning teeth, polishing teeth, massaging gums, whitening teeth, *etc.* In addition, by analyzing the data signals 160 from toothbrush 103, multimedia device 120 may provide user feedback on how well the user is performing the desired brushing function. In addition, the multimedia device 120 may display reminder messages, such as "Did you remember to brush your teeth this morning?"

Data signals 165 transmitted from multimedia device 120 to toothbrush 103 may include instructions for toothbrush 103 to change a setting, such as for example, maximum brushing pressure, brushing time, brush head speed, brush head motion, or any other toothbrush setting. Data signals 165 may also include instructions to signal the user to perform a task or to look at the display, for example, by causing toothbrush 103 to beep, or provide an audible tone. In one embodiment, data signals 165 simply provide "handshake" information back to toothbrush 103 confirming receipt of data transmissions.

Optionally, toothbrush 103 includes logic for enabling toothbrush 103 to communicate using a plurality of communications protocols. In one embodiment, during a setup procedure, a user may use inputs 220 and 222 to scroll through a menu displayed on display 107 and select the type of multimedia device 120 that the user desires to have communicate with the toothbrush 103. Once the desired multimedia device 120 is selected, logic within control circuitry 204 of toothbrush 103 causes toothbrush 103 to communicate using a communications protocol that is compatible with the selected multimedia device 120. Optionally, toothbrush 103 may establish communications with the selected multimedia device 120 through trial and error, attempting to communicate by sequentially transmitting different communications protocols and waiting for a response. When the multimedia device 120 responds properly to one of the communications protocols, the toothbrush 103 and multimedia device 120 establish communications using that protocol.

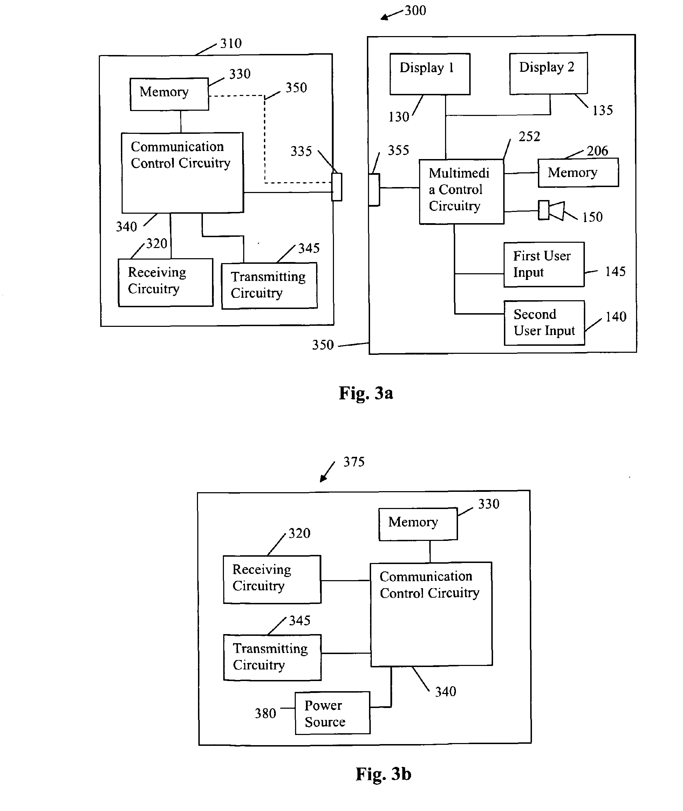

Figure 3a illustrates a block circuit diagram 300 of an adaptor 310 configured to connect to a multimedia device 350. In this exemplary embodiment, multimedia device 350 either does not have built in wireless communication capabilities, or if it has wireless communication capabilities, the communication protocol is not compatible with the communication protocol of the personal hygiene device (not shown). Adaptor 310 includes receiving circuitry 320 in circuit communication with communication control circuitry 340. Communication control circuitry 340 includes a processor or microprocessor and is in circuit communication with memory 330 and connector 335. Receiving circuitry 320 receives a signal transmitted from a personal hygiene device (not shown). The signal is processed by communication control circuitry 340 and is stored in memory 330. Optionally, adaptor 310 also includes transmitting circuitry 345 in circuit communication with communication control circuitry 340. Transmitting circuitry 345 may transmit signals back to the personal hygiene device (not shown). Communication control circuitry 340 is in circuit communication with port 335 which is configured to connect with multimedia device 350. Port 335 may be any type of connector, such as, for example, a USB port, serial port connector, parallel port connector, infrared interface, proprietary game cartridge port, *etc.*

Multimedia device 350 includes previously described components having the same reference numbers and those parts are not re-described herein. In addition to the previously described components, multimedia device 350 includes port 355. Port 355 may be any connector, such as, for example, a USB port, serial port connector, parallel port connector, or infrared interface or proprietary game cartridge port, that interfaces with port 335 of the adaptor 310.

Communication control circuitry 340 may derive data from the signal received from the personal hygiene device, and then provide that data to multimedia device 350 through ports 335, 355. Optionally, memory 330 may be in direct circuit communication with port 335 (see dashed circuit communication line 350, Figure 2) and multimedia device 350 may retrieve the data derived from the signal from memory 330.

In one embodiment, adapter 310 is in the form of a game cartridge. Such an adaptor may be inserted into a gaming console and permit the gaming console to communicate with the personal hygiene device (not shown). In another embodiment, adaptor 310 may be in the form of a jump drive and communicate with the multimedia device 350 through a USB port.

Figure 3b illustrates an exemplary interface adaptor 375. Interface adaptor 375 may be used to interface between a personal hygiene device (not shown) that communicates using a first communications protocol and a multimedia device (not shown) that communicates using a second communications protocol. Interface adaptor 375 includes the same main components as adaptor 310 and like referenced components are not redescribed herein. In addition, interface adaptor 375 includes a power source 380 in circuit communication with communication control circuitry 340. Power source 380 may be a battery, power from a standard outlet, or may be an induction coupling which generates power when placed up against an induction charging base (not shown), such as for example the charging base for an electric toothbrush. Interface adaptor 375 does not include a connector port. Interface 350 receives data signals transmitted from an electric toothbrush using a first communication protocol. Communication control circuitry 340 converts the data signals in the first communications protocol to data signals in a second communications protocol. Transmission circuitry 345 transmits the data signals in the second communications protocol to a multimedia device (not shown) which is configured to communicate in the second communications protocol.

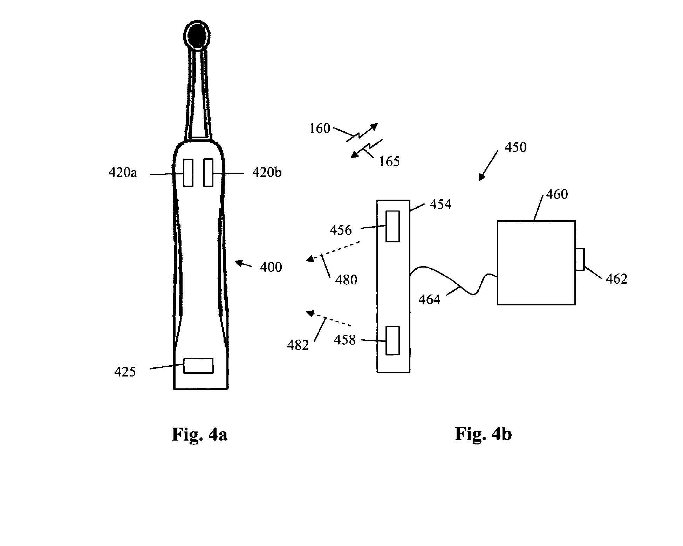

Figures 4a and 4b respectively illustrate an electric toothbrush 400 and adaptor 450 in accordance with another embodiment of the present invention. Toothbrush 400 is substantially the same as electric toothbrush 103 described with respect to Figures 1 and 2. In addition, toothbrush 400 also includes one or more motion sensors 420a, 420b. Motion sensor 420a, 420b may be any type of sensor used to detect motion, such as, for example, 3D accelerometers, inertia sensors, position sensors, imaging sensors or combinations of different types of motion sensors. Preferably motion sensors 420a, 420b are accelerometers. Accelerometers may monitor the position/motion of toothbrush 400 by measuring capacitance, or the ability to store electric charge, in different regions of the accelerometer when the toothbrush is moved in different directions. For example, when a user moves toothbrush 400 forward, the capacitance increases at the back of the accelerometers 420a, 420b and decreases at the front. The accelerometers 420a, 420b use the capacitance measurements to determine how far and in what direction toothbrush 400 moves. In one embodiment, toothbrush 400 also includes an infrared detector 425. Infrared detector 425 may also be used to provide position and motion data for toothbrush 400.

In one embodiment, toothbrush 400 contains an imaging sensor (not shown). The imaging sensor may be used to aid in determining position and motion data. In addition, after brushing a child may be instructed by the multimedia device (not shown) to chew a colored tablet that is designed to adhere to plaque. After chewing the tablet, toothbrush 400 takes pictures using the image sensor and transmits the pictures to the multimedia device. In one embodiment, the multimedia device may display the pictures for the child to see the problem areas. Optionally, the multimedia device may analyze the pictures and identify problem areas of inadequate brushing. During future brushing sessions, the multimedia device may instruct the child to pay particular attention to the problem areas that were missed in one or more prior brushing routines.

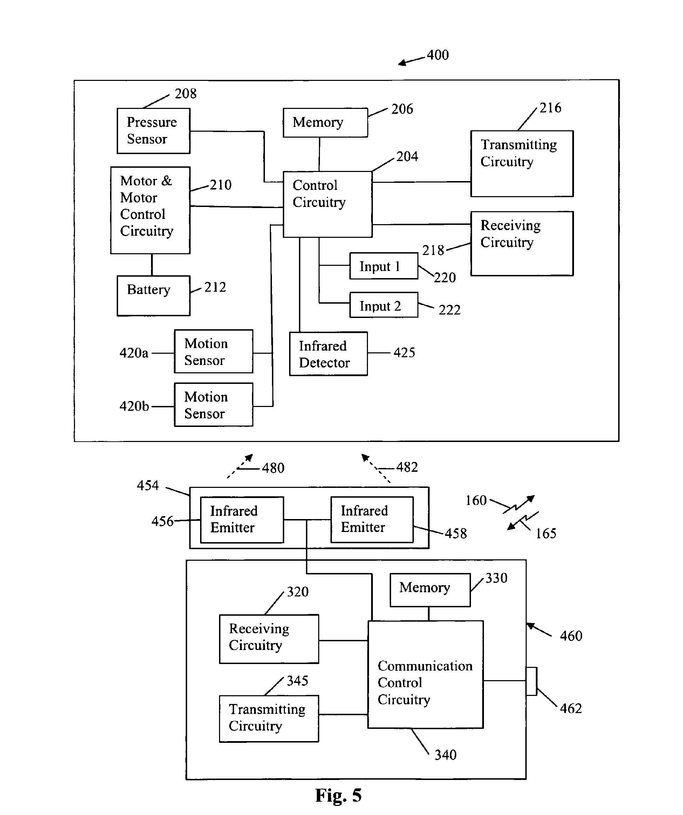

Figure 4b illustrates an adaptor 450 in accordance with one embodiment of the present invention. Adaptor 450 includes housing 460 having a port 462 for connecting adaptor 450 to a multimedia device (not shown). An electrical cable 464 connects a sensing bar 454 to the circuitry within housing 460 (shown in Figure 5). In one embodiment, sensing bar 454 includes a pair of infrared emitters 456, 458 which are spaced a set distance from one another. The infrared emitters emit beams 480, 482 of infrared light, which are monitored by infrared detector 425 of toothbrush 400. The infrared detector 425 identifies where the spots of light emitted from beams 480, 482 fall on the array of pixels in the infrared detector 425. Based on the location of the spots of light, the position of the toothbrush 400 can be determined by either the control circuitry of the toothbrush or by the control circuitry of the multimedia device (not shown). When used in combination, accelerometer 420 and infrared detector 425 may more accurately determine movement of toothbrush 400.

Accordingly, toothbrush 400 may transmit data signals 160 indicative of movement of toothbrush 400 to a multimedia device 120 (Figure 1). Movement of toothbrush 400 may be displayed on the multimedia device 120. Other visual or graphical representations may also be included in the display, for example, a graphical representation of teeth may be displayed along with a graphical representation of toothbrush 400. In one embodiment, as a user moves toothbrush 400 from tooth to tooth or quadrant to quadrant, a graphical toothbrush on the visual display may also move from tooth to tooth and from quadrant to quadrant.

In addition, movement of toothbrush 400 may be used to control a video game. The game may be controlled by movement of toothbrush 400 alone or in combination with first and second user inputs 220, 222 (Figure 2). The video game may be a game specifically created to make the tooth brushing experience enjoyable for a young child. For example, one game may include the display of a tropical island surrounded by coral reefs. The coral reefs have teeth that need to be brushed. As the child brushes his teeth, the toothbrush transmits information such as, for example, pressure and location, and the multimedia device displays a character diving down and brushing the coral reef teeth. If the child brushes too hard, or stays in one position too long, the reef is damaged. Once all of the coral reef teeth are properly cleaned, a signal is sent to the child to stop brushing. Preferably the game is complex enough and has enough levels to keep a child's day to day interest. Optionally, the toothbrush may function as a game controller and operate a standard video. In one embodiment, toothbrush 400 is a game controller that controls the video game by simple movement of the toothbrush 400 and/or pressing user inputs while brushing.

Figure 5 illustrates a block circuit diagram of the embodiments described in Figures 4a and 4b. The block circuit diagram for toothbrush 400 is similar to the block circuit diagram of toothbrush 103 in Figure 2, and accordingly components having like numbering are not redescribed herein. In addition to the components described with respect to toothbrush 103, toothbrush 400 includes motion sensors 420a, 420b and infrared detector 425 in circuit communication with control circuitry 204. Similarly, the block circuit diagram for adaptor 450 is similar to the block circuit diagram of adaptor 310 in Figure 3a, and accordingly components having like numbering are not redescribed herein. Adaptor 450 also includes infrared emitters 456 and 458 in circuit communication with communication control circuitry 340.

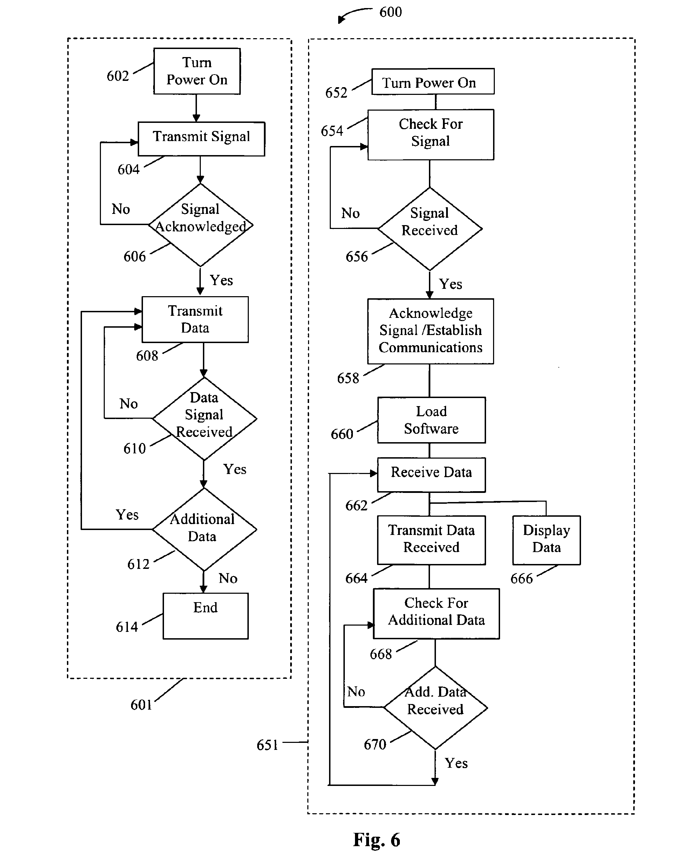

Figure 6 illustrates an exemplary methodology 600 of the operation of a personal hygiene device, such as for example an electric toothbrush 601, establishing communications and communicating with a multimedia device 651. In one embodiment, toothbrush 601 is turned on at block 602 and transmits or broadcasts a communications signal at block 604. At block 606 toothbrush 601 waits for a period of time and checks to determine whether the transmitted communication signal is acknowledged by multimedia device 651. If the signal is not acknowledged at block 606, toothbrush 601 again transmits or broadcasts a communications signal at block 604.

Multimedia device 651 is turned on at block 652 and checks for a signal at block 654. If no signal is received at block 656, multimedia device 651 waits a period of time and checks again for a signal at block 654. If a signal is received at block 656, multimedia device 651 transmits a signal acknowledging receipt of the signal and establishes communications with toothbrush 601 at block 658. At block 660, if the software is not already loaded, multimedia device 651 loads the desired software into the random access memory of the multimedia device 651. In another embodiment, the software may be downloaded directly from toothbrush 601. The software may be stored on a processor readable medium in, for example, a game cartridge or a jump drive. In one embodiment, the software is downloaded from a wireless network to multimedia device 651. If desired, multimedia device 651 may store the software in its own memory for future use each time it is connected to toothbrush 601.

If toothbrush 601 receives acknowledgment from multimedia device 651 and establishes communications, toothbrush 601 transmits data to multimedia device 651 at block 608. This data may be related to brushing data, movement or location of the toothbrush 601 and/or user inputs. Acknowledgement may be in the form of a specific signal being sent to toothbrush 601 or by simply initiating a communications link with toothbrush 601. Toothbrush 601 waits for a period of time and checks to determine if the data signal was received at block 610. If the data signal was not received, control goes back to block 608 and the data is retransmitted. At block 612 toothbrush 601 determines whether there is additional data to be sent. If there is additional data to be sent, control loops back to block 608 and transmits the additional data. If there is no additional data the program ends at block 614.

Multimedia device 651 receives data at block 662, displays the data at block 666, and at block 664 transmits a data received signal to toothbrush 601 acknowledging receipt of the data. At block 668 multimedia device 651 checks to see if additional data is being transmitted. If no additional data is being transmitted, multimedia device 651 waits a predetermined period of time and again checks for additional data at block 668. Preferably multimedia device 651 continuously checks for additional data until the multimedia device is turned off or the software program related to toothbrush 601 is closed. If multimedia device 651 determines additional data is being transmitted, control loops to block 662 where the data is received.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

Every document cited herein, including any cross referenced or related patent or application, is hereby incorporated herein by reference in its entirety unless expressly excluded or otherwise limited. The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document incorporated by reference, the meaning or definition assigned to that term in this document shall govern.

While particular embodiments of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention.

## Claims

1. A personal hygiene system (100) comprising:
a personal hygiene device (103) having wireless communication circuitry (216, 218);
and
a computer readable medium (206) containing processor executable instructions for causing a multimedia device (120) that was previously unassociated with the personal hygiene device (100) to communicate with the personal hygiene device (100), to receive data (165) from the personal hygiene device (100) related to the use of the personal hygiene device (100) and for causing the multimedia device (12) to provide an output as a function of the data.

2. The personal hygiene system of claim 1, wherein the personal hygiene device is an electric toothbrush.

3. The personal hygiene system of claim 2, further comprising an adaptor (310) , wherein the computer readable medium (206) for causing the multimedia device (120) to display data is located in the adaptor.

4. The personal hygiene system of claim 3, wherein the adaptor (310) is a game cartridge for a portable gaming device.

5. The personal hygiene system of claims 2 to 4, wherein the computer readable medium (206) is located remotely from the multimedia device and the processor executable instructions are downloadable to the multimedia device via a wireless network.

6. The personal hygiene system of claims 2 to 5, wherein the computer readable medium is located on a transportable device and the processor executable instructions are downloadable to the multimedia device through an input on the multimedia device.

7. The personal hygiene system of claims 2 to 6, further comprising a motion detection device.

8. The personal hygiene system of claim 7, wherein the motion detection device is an accelerometer (420a, 420b).

9. The personal hygiene system of claim 7, wherein the motion detection device comprises an infrared detector (425) located on the toothbrush (400) and at least two infrared emitters (456, 458) located remote from the toothbrush.

10. A method of providing feedback related to the use of a toothbrush comprising:
providing a toothbrush having wireless communications capabilities for wirelessly communicating with a device which was previously unassociated with the toothbrush; and
providing a processor readable medium containing processor executable instructions to cause the previously unassociated device to wirelessly communicate with the toothbrush and to display data communicated from the toothbrush to the previously unassociated device.

11. The method of claim 10, wherein providing the processor readable medium comprises providing a cartridge configured to connect to an input of the previously unassociated device.

12. The method of claims 10 and 11, wherein providing the processor readable medium comprises providing the processor readable medium on a system remote from the previously unassociated device wherein the instructions are capable of being wirelessly downloaded to the previously unassociated device.
